(19) Europäisches Patentamt
European Patent Office
Office européen des brevets

(11) Publication number: 0 553 701 A2

(12) # EUROPEAN PATENT APPLICATION

(21) Application number: 93100777.7

(22) Date of filing: 20.01.93

(51) Int. Cl.5: C08G 18/28, C08G 18/64, C08G 18/79, C09D 175/04

(30) Priority: 27.01.92 US 826352
29.10.92 US 968550

(43) Date of publication of application:
04.08.93 Bulletin 93/31

(84) Designated Contracting States:
DE ES FR GB IT SE

(71) Applicant: BASF Corporation
1255 Broad Street. P.O. Box 6001
Clifton, New Jersey 07015-6001(US)

(72) Inventor: Rehfuss, John W.
5900 Dunmore Drive
West Bloomfield, Michigan 48322(US)
Inventor: Ohrbom, Walter H.
29203 Franklin Hills Drive
Southfield, Michigan 48034(US)
Inventor: Montagne, Mark R.
27515 Franklin Road
Southfield, Michaigan 48034(US)

(74) Representative: Münch, Volker, Dr.
BASF Lacke + Farben AG, Patentabteilung,
Postfach 61 23
W-4400 Münster (DE)

(54) **Epoxy-functional polyurethane and curable coating composition.**

(57) A coating composition is described comprising two components that are reactable with each other to cure the coating. The two components are:

(a) an epoxy-functional polyurethane component that is the reaction product of:

(i) a polyisocyanate compound, and

(ii) an epoxide compound comprising an isocyanate-reactive group and a single epoxy group.

(b) a component comprising at least two groups that are reactive with the epoxy groups on the polyurethane compound.

EP 0 553 701 A2

## Field of the Invention

This invention is related to coatings and to curable compositions for producing coatings. In particular, the invention is related to coatings useful for automotive coatings, especially automotive clearcoats.

## Background of the Invention

Polymeric coatings are widely used in a variety of applications for both protective and decorative purposes. The requirements of maintaining good appearance even after exposure to weathering and other forms of attack are particularly stringent in the field of automotive coatings. Other properties that are desirable for coatings, such as automotive coatings, include good tensile strength, scratch and mar resistance, flexibility, and adhesion to a variety substrates and coatings.

Many polymer coating compositions are curable coating compositions. By this it is meant that an additional reaction, such as a crosslinking reaction, takes place after the coating is applied to a substrate. In order to provide coatings having an optimum combination of the above-described properties, many curable coating compositions in recent years have utilized the so-called carboxy-epoxy cure mechanism. This type of curing depends on a reaction between a compound having epoxy-functional group(s) and a curing agent carboxy-functional group(s). By way of a ring-opening reaction between the carboxy groups and the epoxy groups, a matrix of chemical bonds is formed, resulting in a hard cured coating.

One such carboxy-epoxy-cure coating composition is described in U.S. Patent 4,699,814. This patent describes a coating composition comprising (a) an epoxy-functional polyurethane resin that is prepared by reacting an isocyanate with a hydroxyl-functional polyepoxide having two or more epoxy groups per molecule, and (b) a polyacid, anhydride, or polyamine curing agent.

Many coating compositions that are cured via a carboxy-epoxy cure mechanism exhibit film properties that are less than desirable. For example, some compositions may result in films that do not exhibit sufficiently high strength or hardness. Other compositions may result in films that are not sufficiently flexible. Still other compositions may result in films that are brittle. Other problems, such as wrinkling, or poor adhesion (which can result in delamination) may also be experienced.

It is thus an object of this invention to provide a coating composition that utilizes the carboxy-epoxy cure mechanism, and that is capable of producing a cured film coating having the desirable film properties described above.

## Summary of the Invention

According to the present invention, there is provided a coating composition comprising an epoxy-functional polyurethane compound and a compound comprising at least two groups that are reactive with the epoxy group. The epoxy-functional polyurethane compound can be prepared by reacting a polyisocyanate compound with an epoxide compound comprising an isocyanate-reactive group and a single epoxy group.

## Description of the Preferred Embodiments

The epoxy-functional polyurethane used in the composition of the invention is typically the reaction product of a polyisocyanate compound and a hydroxyl-functional compound comprising a single epoxy group. The polyisocyanate has at least two isocyanate groups, and preferably no more than six. Illustrative examples of useful polyisocyanates include monomeric polyisocyanates, such as isophorone diisocyanate, trimethylhexamethylene diisocyanate, dicyclohexylmethane diisocyanate, and toluene diisocyanate; isocyanurates and biurets of monomeric isocyanates, such as the isocyanurate of isophorone diisocyanate, the isocyanurate of hexamethylene diisocyanate, or the biuret of hexamethylene diisocyanate; and oligomers or prepolymers of isocyanates. Olephinate derivatives of isocyanates, such as oligomers, prepolymers, or polymers of isocyanates (e.g., m-isopropyl-$\alpha$,$\alpha$-dimethylbenzyl isocyanate) may be formed by the reaction of an excess of polyisocyanate equivalents with a compound containing more than one isocyanate-reactive group (e.g., active hydrogen). Examples of useful compounds containing more than one isocyanate-reactive group include polyols, including alkyl polyols, polyester polyols, polyether polyols, and acrylic polyols; and polyamines. In a preferred embodiment, the polyisocyanate is an isocyanurate having three isocyanate groups per molecule, a biuret of an isocyanate, or an alophonate derivative of an isocyanate. Most preferred are the isocyanurates.

The polyisocyanate compound is reacted with a compound comprising an isocyanate-reactive group and a single epoxy group. The isocyanate-reactive group is preferably a hydroxy group, but can also be an amide or a carbonate group. If the polyisocyanate compound is a diisocyanate, then the epoxy-containing compound may contain more than one isocyanate-reactive group. If the polyisocyanate has more than two isocyanate groups per molecule, then the epoxy-containing compound preferably contains only one isocyanate-reactive group. Illustrative examples of hydroxy-functional compounds comprising a single epoxy group include glycidol, methyl glycidol, and 3,4-epoxy-1-hexanol. Hydroxy-functional epoxy resins can also be prepared by modifying an epoxy-containing material to produce a compound containing a hydroxy group. For example, a diepoxide can be reacted with organic acid or the like to generate hydroxyl groups while retaining a residual epoxy group on the hydroxy-functionalized molecule. Prepolymers or oligomers of such monomers may also be used. For example, the hydroxyl group of the monomers comprising a single epoxy group may be reacted with ε-caprolactone to form a caprolactone oligomer comprising one epoxy group.

The polyisocyanate compound and the compound comprising the single epoxy group may be reacted in an organic medium. Preferred solvents for the reaction are ketones, aromatics, ethers, amides, and other solvents inert to the reaction in which the reactants can be solubilized.

Although it is not required, it may be preferable to carry out the reaction with the use of a catalyst, depending on the reaction conditions. The reaction temperature may be between 10 °C and 110 °C, but the reaction can usually be carried out between 20 °C and 70 °C. The catalyst, if used, may be chosen from a great number known in the art to promote the isocyanate-hydroxyl reaction. By way of example, tin compounds such as dibutyltin oxide and dibutyltin dilaurate are commonly used.

The ratio of equivalents of polyisocyanate to equivalents of the hydroxyl-functional epoxy compound are preferably 1:1.5 to 1.5:1, and more preferably, the ratio is 1:0.95. In the case where there are excess equivalents of isocyanate, the excess isocyanate remaining after the completion of the reaction of the polyisocyanate with the epoxy compound may, for example, be quenched by reaction with a monoalcohol.

In a preferred embodiment of the invention, the epoxy-functional urethane is an epoxy-functional isocyanurate compound according to the formula (I):

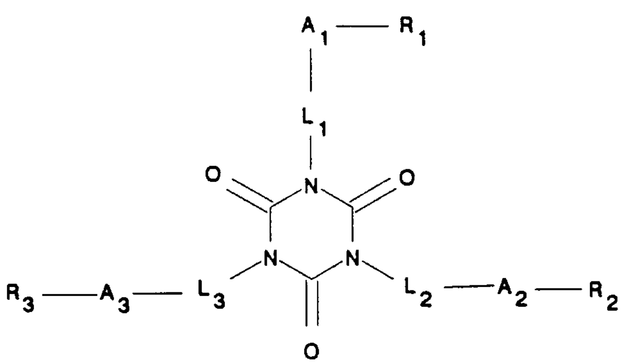

wherein

$L_1$, $L_2$, and $L_3$ each independently represents a divalent linking group,

$A_1$, $A_2$, and $A_3$ each independently represents a urethane linkage, a urea linkage, or an ester linkage, preferably a urethane or urea linkage, and more preferably a urethane linkage, and

$R_1$, $R_2$, and $R_3$ each independently represents a substituent comprising a single epoxy group.

The epoxy-functional isocyanurate compounds of formula (I) comprise a cyanuric ring and three monoepoxide substituents that are each independently linked to the cyanuric ring through urethane linkages, as shown in formula (I). Examples of the divalent linking groups $L_1$, $L_2$, and $L_3$ include hexamethylene and the residue of an isophorone group. Examples of $R_1$, $R_2$, and $R_3$ include glycidyl, 2-methylglycidyl, and 6-epoxyhexyl.

Different synthetic schemes may be used to produce the compounds according to formula (I). For example, a diisocyanate may be first reacted with a monoepoxide compound containing an isocyanate-reactive group, followed by formation of an isocyanurate. Alternatively, an isocyanurate may be adducted with substituents that have the capability of forming epoxide groups after the reaction with the isocyanate groups is completed. A particularly desirable method of synthesis, due to its relative ease and lack of undesirable by-products, is to react a cyanuric ring compound (e.g., isocyanurate) with a compound

comprising one epoxide group and at least one isocyanate-reactive group (e.g., hydroxy groups).

The composition of the divalent linking group may be controlled by the type of isocyanurate or polyisocyanate chosen. The divalent linking groups individually may be either an aliphatic or aromatic group, preferably of 4 to 12 carbon atoms. If resistance to solar degradation is desirable, then the divalent linking groups are preferably all aliphatic. The isocyanurate may be formed by techniques known in the art, such as through the condensation of one or more types of diisocyanates, such as hexamethylene diisocyanate, isophorone diisocyanate, hydrogenated MDI. Examples of preferred isocyanurates include the isocyanurate of hexamethylene diisocyanate, and the isocyanurate of isophorone diisocyanate. If light-fastness is not a critical requirement, then an aromatic isocyanurate such as the isocyanurate of 2,4-toluene diisocyanate or MDI may be used.

The isocyanurate may be reacted with a compound containing one epoxide group, examples of which have previously been given, or with a compound which is capable of forming an epoxide group. As an example of the latter, a monoolefin having an isocyanate-reactive group can be reacted with the isocyanate and selectively oxidized with a peracid to form an epoxide at room temperatures. Examples of such monoolefins include 3-buten-1-ol, allyl alcohol, 4-penten-1-ol, and 1-hexen-1-ol. Epoxides are also commonly formed by a dehydrohalogenation ring closure reaction.

The epoxy-functional urethane, whether the reaction product of a polyisocyanate compound and a hydroxyl-functional compound comprising a single epoxy group, or an epoxy-functional isocyanurate compound according to the formula hereinabove, has a molecular weight of 720 to 8000, preferably 720 to 2000. The weight per epoxide is 240 to 1500, preferably 240 to 800.

The coating composition also comprises a second component that is reactive with the polyisocyanate so as to cure the coating. This second component comprises at least two groups that are reactive with the epoxy groups on the polyisocyanate. Examples of groups that are reactive with the epoxy groups include acids, anhydrides, amines, acetoacetates, phenols, alcohols, melamine-formaldehyde resins, urea-formaldehyde resins, silanols and metal hydrides such as silicon hydride. These groups usually contain an active hydrogen, however, an active hydrogen is not always required, as is the case with the anhydrides.

Polyacids represent a preferred class of the second component. The polyacid can be a monomeric polyacid or an adduct thereof. Usually, liquid polyacids are employed. Non-limiting examples of these acids are succinic acid, glutaric acid, adipic acid, azelaic acid, oxalic acid, phthalic acid, isophthalic acid, hexahydrophthalic acid, methylhexahydrophthalic acid, maleic acid chlorendic acid and the like. Polyacids of higher acid functionality, e.g., trimellitic acid, tricaballylic acid, aconitic acid and the like, can also be employed.

Higher molecular weight polyacid-functional adducts can also be used. Examples of useful polyacid-functional adducts are acid-functional polyesters, acid-functional polyurethanes, acid-functional acrylics, and the like. An example of the acid-functional polyesters can be prepared by reacting an excess of a monomeric polyacid as described above with a polyol. Alternatively, a cyclic anhydride (e.g., a 1,2-acid anhydride such as hexahydrophthalic anhydride and alkylhexahydrophthalic anhydride) can be reacted with a polyol, such as 1,6-hexanediol, trimethylol propane and polycaprolactone triol to form a half-ester polyacid curing agent. Such half-ester polyacid curing agents are well-known in the art and are described, for example, in U.S. Patent 4,703,101. Acid-functional products of the anhydride-polyol reaction are more fully discussed in U.S. Patent 4,927,868.

Illustrative examples of acid functional acrylics are copolymers of an ethylenically unsaturated monomer containing an acid group. The copolymers may be prepared by using conventional techniques such as free radical polymerization or anionic polymerization in, for example, a batch or semi-batch process. One or more other ethylenically unsaturated monomers that do not contain an acid group can be incorporated into the acid-functional polymer.

Examples of the ethylenically unsaturated monomers containing an acid group can be acrylic acid, methacrylic acid, itaconic acid, and maleic acid. Other copolymerizable monomers can be alkyl ester of acrylic or methacrylic acid, e.g., ethyl acrylate, butyl acrylate, 2-ethylhexyl acrylate, butyl methacrylate, isodecyl methacrylate, hydroxyethyl methacrylate, hydroxypropyl acrylate, and the like; vinyl monomers such as styrene, vinyl toluene and the like. A preferred acrylic acid-containing copolymer is of methacrylic acid, isobornyl methacrylate, and isodecyl methacrylate, having an acid equivalent weight of 330-500. In one preferred embodiment, the copolymerizable monomers comprise sterically hindered monomers so that the acid-functional acrylic conforms to the requirements of environmental etch-resistant acrylics disclosed in U.S. Patent Application No. 07/699,297. Copolymerizable monomers containing groups which will react with the acid groups under the addition reaction conditions chosen are to be avoided so as to produce an ungelled product.

The polyacids preferably have acid numbers of 30 to 300, more preferably from 100 to 200. The polyacids may have a weight average molecular weight in the range of 134 to 40,000, and preferably 134-6000. The weight average molecular weight is usually determined experimentally by gel permeation chromatography using a polystyrene standard. It is therefore not an actual molecular weight, but rather, it indicates that the molecules occupy the same amount of space that a styrene molecule of a known molecular weight would occupy.

Anhydride used as the second component may be monomeric anhydrides such as alkyl hexahydrophthalic anhydride wherein the alkyl group has up to 7 carbon atoms, e.g., methylhexahydrophthalic anhydride, succinic anhydride, methylsuccinic anhydride, dodecenylsuccinic anhydride, octadecenylsuccinic anhydride, phthalic anhydride, tetrahydrophthalic anhydride, methyltetrahydrophthalic anhydride, tetrachlorophthalic anhydride, endomethylene tetrahydrophthalic anhydride, chlorendic anhydride, itaconic anhydride, citraconic anhydride, and maleic anhydride. The anhydride may also be polymeric, such as copolymers of maleic anhydride with other ethylenically unsaturated monomers. Such copolymers are preferably formed in the same manner as the acid-functional copolymers previously discussed.

Melamine-formaldehyde resins and urea-formaldehyde resins may be partially or fully etherified with monoalcohols of from 1 to 8 carbons, preferably 1 to 4 carbons. Such compounds are effective as crosslinkers in either monomeric or polymeric forms. However, in many embodiments of the invention, particularly those directed to coating compositions for automotive clearcoats, it may be undesirable to include aminoplast crosslinking agents in the coating composition.

Polyacetoacetates may be conveniently synthesized in two ways. A prepared polyol may be acetoacetylated via transesterification with t-butyl acetoacetate. Alternatively, an acetoacetate-functional acrylic copolymer may be prepared incorporating acetoacetoxyethyl methacrylate monomer via known methods, such as those discussed above relating to polyacid acrylics.

In a preferred embodiment, the invention is used in compositions for automotive topcoats or clear coats where lightfastness and low color are critical. However, in other uses where lightfastness and color are not a consideration the second component may be an polyamine or phenolic crosslinker. Epoxy-amine and epoxy-phenol crosslinking reactions are well-known and extensively used in the plastics industry. Examples of commonly used materials of this type are diethylenetriamine, triethylenetetramine, aminoethylpiperazine, bisphenol A, the adduct of bisphenol A and diethylenetriamine, resole polymers and novolac polymers.

The epoxy-functional polyisocyanate component and the second component may be combined in the coating composition in ratios of from 2 equivalents of epoxy to 1 equivalent of second component, to 0.8 equivalents of epoxy to 1 equivalent of second component. Preferably, the rations are from 1.4 equivalents of epoxy to 1 equivalent of second component, to 1 equivalent of epoxy to 1 equivalent of second component. Most preferably the ratio is one equivalent epoxy to one equivalent second component.

In addition to the epoxy-functional compound and the epoxy-reactive second component, the coating composition may contain other constituents known to be used in coatings, such as catalysts, rheology control agents, light stabilizers, antioxidants, pigments, solvents, plasticizers, reactive diluents, and the like.

A catalyst may advantageously be employed to promote the development of film properties, particularly when the curing conditions are less than optimum. For the acid-epoxy reaction, a wide variety of materials are known to be useful, including metal acetoacetates such as aluminum monobutyl acetoacetate, aluminum dibutyl acetoacetate, and aluminum tributyl acetoacetate; Lewis acids, such as triphenyl phosphine, and boron trifluoride; amines, such as dimethylbenzylamine, dimethyldodecylamine, and 1,4-diazabicyclo[2.2.2.]-octane (Dabco); quaternary ammonium or phosphonium salts, such as tetramethyl ammonium chloride, tetraethyl ammonium chloride, tetrabutylphosphonium chloride, or tetramethyl ammonium bromide; metal oxides such as calcium oxide; and amino acids, such as glycine or b-alanine. A more complete list of catalysts that may be utilized is found in Kinetics and Mechanisms of Polyesterifications. II. Reactions of Diacids with Diepoxides, Pierre-Jean Madec and Ernest Maréchal Advances In Polymer Science, Volume 71 (Springer-Verlag, 1985). The particular catalyst utilized may depend on the individual system, but in general tertiary amines are preferred. The most favorable level for the catalyst is often best determined experimentally; however, in general that level will be from 0.1 to 5%, based on the total weight of solid reactants.

The coating composition includes the solvents used in the synthesis of the reactive components, and, preferably, additional solvent that may be added during formulation of the coating composition in order to enhance its application characteristics. The inclusion of solvent aids in the flow and leveling of the applied coating. Moreover, if the coating is applied by means of spraying, the solvent can improve the atomization of the coating composition.

The preferred solvents are organic solvents free of acid, alcohol, or amino functionality. Although usually avoided because of their possible involvement in reactions, some water or low molecular weight species of those types just mentioned may be included in some instances without seriously affecting the

final film properties. Moreover, in some cases, higher molecular weight species may purposely be included to function as plasticizers or reactive diluents.

Examples of useful solvents are acetates such as butyl acetate, hexyl acetate, and octyl acetate; glycol ethers and glycol ether acetates, such as propylene glycol ether and propylene glycol monomethyl ether acetate; and ketones, such as methyl propyl ketone, methyl isobutyl ketone, and methyl hexyl ketone.

Pigments, if used, can be incorporated as pastes prepared by using grinding resins or pigment dispersants according to methods well known in the art. The term "pigments" is meant to encompass organic and inorganic compounds that are colored materials, fillers, metallic and flake materials, and other materials known in the art. If pigments are included, they are usually used in an amount of 10% to 200% based on the total solid weight of the reactants.

If the coating composition is to be used to make a topcoat, such as an automotive clearcoat, or other coating that will be subject to outdoor exposure it may be desirable to include one or more compounds to forestall degradation by UV light. Many varieties of compounds are utilized in this regard, and specifically there may be mentioned UV light absorbers like benzotriazoles, benzotriazines, and oxalamides; light stabilizers such as hindered amines or hindered amides; and antioxidants such as metal compounds (e.g., nickel complexes of alkylated phenol phosphonates) or hindered phenols such as 4-methyl-2,6-di-t-butylphenol.

It is permissible and often desirable to include small amount of rheology control agents, for example, fumed silicas or cellulosics like cellulose acetate butyrate. Such materials are usually used at levels of less than 10% based on the total solid weight of reactants. Other materials used for surface modification, like polydimethylsiloxanes or polybutyl acrylate, are typically used in much lower amounts, usually not exceeding 1 or 2% based on the total solid weight of reactants.

The composition may be stored as a one pack, with all the materials in one container; but it is often preferable to be stored as a two-pack composition, where the reactants are segregated to prevent reaction prior to application and thereby to improve shelf-life substantially. In the case of a two-pack composition, the two parts are mixed together at some time prior to application to a substrate.

The prepared coating composition may be applied to a substrate by any of a number of conventional means, for example by spraying, brushing, dipping or flowing. The preferred methods of application are by spraying or electrostatic spraying. These methods are widely used, especially in the application of automotive coatings. For example, the coating may be applied using a Model 60 syphon spray gun (available from Binks Manufacturing Corp., Franklin Park, Ill.) with 50-80 psi atomising air pressure.

The substrate to which the coating composition of this invention is to applied may be, for example, metal, ceramic, plastic, glass, paper, or wood. The substrate may also be any of the aforementioned materials precoated with this or another coating composition. The coating compositions of this invention have been found to be particularly useful over precoated steel or plastic substrates in automotive applications. They are particularly suited to use over primed automotive substrates as pigmented basecoat formulations or over basecoated automotive substrates as clearcoat formulations.

After application of the coating composition to the substrate, the coating is cured, preferably by heating at a temperature and for a length of time sufficient to cause the conversion of all or nearly all of the reactive groups. The cure temperature is usually from 115°C to 180°C, and the length of cure is usually 15 minutes to 60 minutes. Preferably, the coating is cured at 120-150°C for 30 minutes. The thickness of the cured coating can be from 2.5 to 125 μm, but when used as an automotive topcoat or clearcoat the coating thickness is generally in the range of 50 μm.

In a preferred embodiment of the invention, the coating composition of the present invention is used as a clear coat and is applied wet-on-wet over a basecoated substrate. By the term "wet-on-wet" it is meant that after application the basecoat is allowed to flash, or dry, to remove most of the solvent, but it is not cured before the clear coat composition is applied. After the clearcoat composition is applied, it is allowed to flash or dry for a period of time. Then the base coat and the clear coat are cured together.

The basecoat may be a coating composition according to this invention or another composition known in the art. The basecoat does not necessarily have the cure mechanism used by the clear coat, although the cure of the base coat should not interfere with the curing of the clear coat. For example, the basecoat might utilize a melamine-polyol reaction to cure, where the polyol may be for instance an acrylic, a polyurethane, or a polyester. Typical basecoat formulations and their methods of use are described in U.S. Patents 4,791,168, 4,414,357, and 4,546,046.

After application and flashing of the basecoat, the clear coat composition is applied, preferably by spraying. The clearcoat may be applied in one coat, or preferably two coats with a short flash between coats. The clearcoat composition is allowed to flash under ambient or heated conditions for 1-20 minutes. The uncured coatings are then cured, usually by thermoset methods as described hereinabove. The

resulting appearance and physical properties are excellent.

The following examples are provided to further illustrate the invention.

Example 1. Preparation of Epoxy-Functional Polyurethane

A reactor equipped with an add funnel was charged with 401.5 g of dry methyl isobutyl ketone, 507.3 g of T1890 (the isocyanurate of isophorone diisocyanate, available from Hüls America, Inc., Piscataway, NJ), and 0.3 gram of dibutyltin dilaurate under an atmosphere of nitrogen. A slow nitrogen purge was continuously provided to the reactor during the synthesis. The mixture in the reactor was heated with stirring to 47°C. During the heat up period 103.8 g of glycidol were charged to the add funnel. Care was taken to prevent the glycidol from coming into contact with any water during the charging process or while in the add funnel. When the mixture reached 47°C, the glycidol add was commenced and continued for about 50 minutes. The rate was sufficiently slow so that the heat was maintained at or below 50°C. After the glycidol add was completed, 23 g of methyl isobutyl ketone were used to rinse the add funnel and were added to the reactor. Titration of the isocyanate content an hour and a half later showed that the reaction was 91% completed. At that point, the reaction mixture was heated from 34°•C to about 40°C and held there for another hour and a half. The reaction was continued with no further heat until a residual amount of 0.00003 equivalents of isocyanate per gram was measured. This residual isocyanate was quenched with 5 g of dry methanol. A GC of the reaction mixture showed no residual glycidol. The product had a solids content of 48.2% and a Gardener-Holt viscosity of A-. The theoretical weight per epoxy was 348.2 g per equivalent on solids.

Example 2. Preparation of Epoxy-Functional Polyurethane

A reactor equipped with an add funnel was charged with 283.8 g of dry methyl isobutyl ketone, 470.7 g of N3300 (the isocyanurate of hexamethylene diisocyanate, available from Mobay Corporation, Pittsburgh, PA), and 0.7 gram of dibutyltin dilaurate under an atmosphere of nitrogen. A slow nitrogen purge was continuously provided to the reactor during the synthesis. The mixture in the reactor was heated with stirring to 47°C. During the heat up period 174.7 g of glycidol were charged to the add funnel. Care was taken to prevent the glycidol from coming into contact with any water during the charging process or while in the add funnel. When the mixture reached 47°C, the glycidol add was commenced and continued for an hour and 20 minutes. The rate was sufficiently slow so that the heat was maintained at or below 54°C. After the glycidol add was completed, 58.7 g of methyl isobutyl ketone were used to rinse the add funnel and were added to the reactor. Titration of the isocyanate content after about half an hour showed that the reaction was complete. A GC of the reaction mixture showed no residual glycidol. The product had a solids content of 67.5% and a Gardener-Holt viscosity of G-H. The theoretical weight per epoxy was 291.7 g per equivalent on solids.

Example 3. Preparation of Acid-Functional Acrylic

A reactor was charged with 720 g of methyl amyl ketone and 160 g of methyl isobutyl ketone and was heated to reflux (138°C) under an inert atmosphere. After a reflux had been established, the inert gas was turned off and a mixture of 468 g of methacrylic acid, 594 g of isobornyl methacrylate, 738 g of isodecyl methacrylate, 120 g of xylene and 180 g of a 50% solution of t-butylperoxyacetate in aromatic solvent was added at a constant rate over a period of 4 hours. The reflux was maintained during the addition. When all of the mixture had been added, 20 g of methyl isobutyl ketone were used to rinse the add line and were then added to the reaction vessel. The reflux (138°C) was maintained for another hour. The acrylic product was 58.8% solids by weight and had a viscosity of 242.6 dPa•sec. The measured acid number was 166.0 mg KOH/g NV.

Example 4. Preparation of Acid-Functional Acrylic

A reactor was charged with 609.7 g of methyl amyl ketone and 152.5 g of methyl isobutyl ketone and was heated to reflux (140°C) under an inert atmosphere. After a reflux had been established, the inert gas was turned off and a mixture of 447.7 g of methacrylic acid, 1084.9 g of 2-ethylhexyl methacrylate, 86.1 g of n-butyl acrylate, 103.3 g of styrene, 114.8 g of xylene, and 172.2 g of a 50% solution of t-butylperoxyacetate in aromatic solvent was added at a constant rate over a period of 4 hours. The reflux was maintained during the addition. When all of the mixture had been added, 28.8 g of methyl amyl ketone

were used to rinse the add line and were then added to the reaction vessel. The reflux (133 °C) was maintained for another two hours. The acrylic product was 61.8% solids by weight and had a viscosity of 232.2 dPa•sec. The measured acid number was 171.0 mg KOH/g NV.

Example 5. Preparation of Acid-Functional Half-ester

A reactor was charged with 247.8 g of dry trimethylol propane, 501.9 g of methyl isobutyl ketone, and 925.1 g of hexahydro-4-methylphthalic anhydride. The charge was heated to 100 °C over a period of 20 minutes. The heat was removed and the reaction exotherm raised to temperature to 135 °C over the next 10 minutes. Stirring was continued. The temperature dropped to 114·C in a half hour, and heat was applied to hold the temperature for another 3 hours. The half-ester product was 70.4% solids by weight and had a viscosity of 35.7 dPa•sec. The measured acid number was 270.7 mg KOH/g NV.

Examples 6-8 - Coating Compositions

Examples 6-8 as set forth in the Table below illustrate the use of epoxy-functional polyurethanes and epoxy-reactive second components prepared above in clear coat compositions.

| Ingredient | Example 6 | Example 7 | Example 8 |
|---|---|---|---|
| Example 3 Acrylic | 77.9 g | --- | --- |
| Example 4 Acrylic | --- | 72.9 g | --- |
| Example 5 Half-ester | --- | --- | 49.0 g |
| Propylene glycol ether | 20.0 g | 20.0 g | 20.0 grams |
| Octyl acetate | 30.0 g | 30.0 g | 30.0 g |
| Tinuvin® 384B* | 3.2 g | 3.2 g | 3.2 g |
| Tinuvin® 440 solution** | 5.0 g | 5.0 g | 5.0 g |
| Example 1 epoxy-functional polyurethane | 70.5 g | 71.5 g | 86.6 g |
| Example 2 epoxy-functional polyurethane | 22.8 g | 23.1 g | 27.9 g |

*Available from Ciba-Geigy Corp., Hawthorne, NY

**A 30% solution of Tinuvin® 440 in xylene. Tinuvin® 440 is available from Ciba-Geigy Corp., Hawthorne, NY.

The ingredients listed were stirred together in the order given. The compositions were then diluted with octyl acetate (Exxate® 800, Exxon Chemical Co., Houston, Tex.) to a viscosity of 30 seconds as measured with a #4 Ford cup at 27 °C. Each of the Examples 6-8 and was then separately applied over a primed metal substrate precoated with an unbaked base coat composition and then cured according to the application and curing methods described below. The base coat composition was a high solids solvent-borne acrylic/melamine base coat, wherein the acrylic was a copolymer of styrene, butyl methacrylate, 2-ethylhexyl acrylate, and Tone® M-100 (available from Union Carbide Corp., Danbury, Conn.) and the melamine was Resimene® 755 (available from Monsanto Co., St. Louis, MO).

The base coat composition was applied to a primed metallic substrate in two coats with a period of one minute in between coats to allow the first coat to flash dry. After the second coat, the base coat was flash dried for five minutes followed by a wet-on-wet application of the clear coat composition from one of the Examples 6-8. The clear coat composition was applied in two even coats with a 1 minute flash between coats. The coated substrate was allowed to dry under ambient conditions for a period of 10 minutes. The applied coatings were then cured by baking the coated substrate at 141 °C for 30 minutes. The cured base coat had a thickness of about 15-20 μm and the cured clear coat had a thickness of about 51 μm.

The cured clear coats had high quality appearances and measured Tukon hardnesses of 15 Knoops, 14 Knoops and 15 Knoop respectively for Examples 6, 7, and 8. The etch resistances of the clear coats as measured by acid spot testing and gradient bar testing were outstanding. Acid spot testing was conducted by placing drops of 2.5 N HCl, 0.6 N $H_2SO_4$, 0.6 N $HNO_3$, 0.6 N NaOH, tap water, rain water, and organic mixtures on the coating surface for a period of 50 minutes at elevated temperatures, thereafter washing the panel and observing the extent of coating degradation. Gradient bar testing is described in U.S. Application Serial No. 699,297 filed 4/19/91 starting on page 24 at line 15.

## Claims

1. A coating composition comprising:
   (a) an epoxy-functional polyurethane component that is the reaction product of:
      (i) a polyisocyanate compound, and
      (ii) an epoxide compound comprising an isocyanate-reactive group and a single epoxy group.
   (b) a component that is reactive with the epoxy-functional polyurethane component to cure the coating, comprising at least two groups that are reactive with said epoxy group.

2. A coating composition according to claim 1 wherein said polyisocyanate is an isocyanurate.

3. A coating composition according to any of claims 1-2 wherein said isocyanate-reactive group is a hydroxy group.

4. A coating composition according to any of claims 1-3 wherein said epoxide compound is glycidol, methyl glycidol, or 3,4-epoxy-1-hexanol.

5. A coating composition comprising:
   (a) an epoxy-functional isocyanurate component according to the formula:

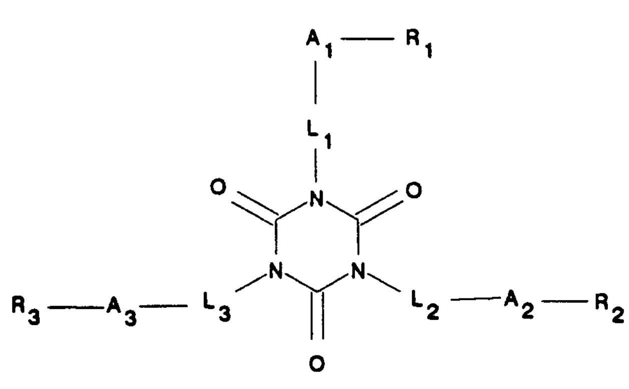

,

wherein
$L_1$, $L_2$, and $L_3$ each independently represents a divalent linking group,

$A_1$, $A_2$, and $A_3$ each independently represents a urethane linkage, a urea linkage, or an ester linkage, and

$R_1$, $R_2$, and $R_3$ each independently represents a substituent comprising a single epoxy group; and

(b) a second component comprising at least two groups that are reactive with said epoxy group.

**6.** A coating composition according to claim 5 wherein $A_1$, $A_2$, and $A_3$ each independently represents a urethane linkage or a urea linkage.

**7.** A coating composition according to claim 5 wherein wherein $A_1$, $A_2$, and $A_3$ each independently represents a urethane linkage.

**8.** A coating composition according to any of claims 5-7 wherein $L_1$, $L_2$, and $L_3$ each represents a divalent aliphatic, cycloaliphatic, or aromatic linking group of 4 to 12 carbon atoms.

**9.** A coating composition according to any of claims 5-8 wherein $L_1$, $L_2$, and $L_3$ each represents hexamethylene.

**10.** A coating composition according to any of claims 5-9 wherein $L_1$, $L_2$, and $L_3$ each independently represents the residue of an isophorone group.

**11.** A coating composition according to any of claims 5-10 wherein $R_1$, $R_2$, and $R_3$ each independently represents glycidyl, methyl glycidyl, or 3,4-epoxyhexyl.

**12.** A coating composition according to any of claims 1-11 wherein the component (b) is a polyacid, an anhydride, an acetoacetate, a phenol, a polyol, or a polyamine.

**13.** A coating composition according to claim 12 wherein the component(b) is a polyacid or an anhydride.

**14.** A coating composition according to claim 12 wherein the component (b) is an acid-functional acrylic polymer or oligomer.

**15.** An article comprising a substrate having thereon a cured coating of the composition according to any of claims 1-14.

**16.** An article according to claim 15 wherein the cured coating is the clearcoat of a color-plus-clear composite coating.

**17.** A compound according to the formula:

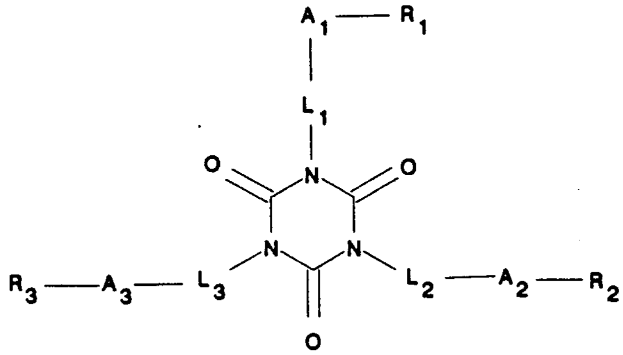

wherein

$L_1$, $L_2$, and $L_3$ each independently represents a divalent linking group,

$A_1$, $A_2$, and $A_3$ each independently represents a urethane linkage, a urea linkage, or an ester linkage, and

$R_1$, $R_2$, and $R_3$ each independently represents a substituent comprising a single epoxy group.